# EUROPEAN PATENT APPLICATION

(11) **EP 3 193 263 A1**
(43) Date of publication of application: **19.07.2017**
(21) Application number: 14901527.3
(22) Date of filing: 09.09.2014
(51) Int. Cl.: G06F 17/30

(54) **ESCAPE POINTER DISPLAY SYSTEM AND READING METHOD THEREFOR, AND ESCAPE POINTER IMAGE GENERATION AND DISPLAY METHOD**

(71) Applicant: Lin, Xiao Mei, Taibei 104 (TW); Chen, Shuo Hong, Taibei 104 (TW)
(72) Inventor: XIE, Qingzhou, Touwu Township Miaoli County 362 (TW); XU, Hongyu, Taizhong 426 (TW)
(74) Representative: Becker Kurig Straus
(86) International application number: PCT/CN2014/086108
(87) International publication number: WO 2016/037309

(57) **Abstract**

An escape indicator display system includes a storage unit, a display unit and a control unit. The storage unit includes a database, plural datarows in the database, a code corresponsive to each datarow and having at least one field, escape indication information in the field and including plural pieces of image information, text information, color information or size information. The control unit is coupled between the display unit and the storage unit for selecting a country or district name, and the reads the datarow of the code corresponsive to the country or district name from the database by the processor, and displays the escape indication information in the field on the display unit, so as to detect the location of the system and display the escape indicator image according to local escape indicator regulations.

## Description

### FIELD OF INVENTION

The present invention relates to an escape indicator display system, in particular to the escape indicator display system capable of showing the laws and regulations of a district for different districts and applicable for different disaster situations such as fire, earthquake, building collapse, etc.

### BACKGROUND OF INVENTION

### 1. Description of the Related Art

At present, a general escape indicating lamp signal set up in a building is traditionally provided for statically indicating the position of a safety door in a fixed manner and unable to indicate a safe escape path for victims in the building during a fire. In addition, when firemen arrive the fire site, the firemen fail to identify the fire source immediately so as to extinguish the fire, and therefore the victims are unable to found and rescued if the fire is not under control. Namely missing the immediate rescue time or resulting in causalities due to suffocation by smokes or death due to inhalation of too much carbon monoxide are normally happened. Even worse, people death cause in a building collapse are sometimes occurred. Therefore, the fire cannot be effectively extinguished or the victims cannot be rescued simply relying on the firemen's experience and the common knowledge of people.

At present, the fire regulations of different countries of the world include clear specification of the escape indication signs. In some countries or even different administrative districts, the escape indication signs come with different specifications. Therefore, the conventional escape indicating lamp signal cannot be used directly for different countries, and it is necessary to modify the specification to meet different countries. Obviously, the prior art fails to maximize the economies of scale.

Therefore, it is a main issue for related manufacturers to find a feasible solution to overcome the drawbacks of the prior art.

### 2. Summary of the Invention

It is a primary objective of the present invention to overcome the drawbacks of the prior art by providing an escape indicator display system capable of indicating an escape indicator image in compliance with the fire regulations of the district wherein the system is installed.

To achieve the aforementioned and other objectives, the present invention provides an escape indicator display system comprising a storage unit, a display unit and a control unit; characterized in that the storage unit further comprises a database, a plurality of datarows in the database, a location name code corresponsive to each respective datarow and having a plurality of fields, and escape indication information in the field, and the escape indication information including image information, text information, color information or size information; the display unit is for showing or displaying at least one display content; and the control unit is coupled between the display unit and the storage unit, and further includes a processor; wherein, when the control unit is used to select a country or a district corresponsive to the location name code, the processor reads a datarow corresponsive to the location name code from the database, and loads/displays the escape indication information with a plurality of fields corresponsive to the display content into/from the display unit.

In the aforementioned escape indicator display system, the storage unit further comprises an image storage module, and the image storage module includes plural records of image data stored therein, and the image information of the escape indication information is corresponsive to a storage position or a storage path of the image.

In the aforementioned escape indicator display system, the text information of the escape indication information includes text content, font, size, color, or format information.

To achieve the aforementioned and other objectives, the present invention further provides a reading method of an escape indicator display system, and the method comprises the following steps:
A10: Provide an escape indicator display system as described above.
A20: Select a country or a district by the control unit.
A30: Read a corresponsive datarow from a database of the storage unit by the processor according to a location name code corresponsive to the selected country or district.
A40: Read or load the escape indication information in each field of the datarow by the processor.

The aforementioned reading method of the escape indicator display system further comprises the step of selectively inputting at least one escape indication information into a field of the database by the control unit, carried out between Step A20 and Step A30.

The aforementioned reading method of the escape indicator display system further comprises the step (A50) of showing or displaying the display content corresponsive to the escape indication information of the plurality of fields.

To achieve the aforementioned and other objectives, the present invention further provides an escape indicator image generation and display method comprising the following steps:
B10: Provide an escape indicator display system as described above. B20: Read escape indication information in the datarow field by the processor.
B30: Generate an escape indicator image according to the image information, the text information, the color information or the size information included in the escape indication information by the processor.
B40: displaying or loading the escape indicator image to the display unit by the processor.

In the aforementioned escape indicator image generation and display method, the escape indication information in Step B30 is image information, and the image information is read from the image storage module by the processor.

The present invention has the following advantages and effects. The escape indicator display system, its reading method, and corresponsive escape indicator image generation and display method fit the fire regulations of different countries of the world. Regardless of languages, countries, districts, or cities, escape indicator images, texts and related regulations of different countries are established in the content of a database before manufacturers produce the escape indicator display system of the present invention, so that an easy setup can be made, and these information can be displayed by the display unit, so as to show an image or patter in compliance with the fire regulations of different countries.

The above and other objects, features and advantages of the present invention will become apparent from the following detailed description taken with the accompanying drawings. It is noteworthy that the components as shown in the drawings are schematic drawings not necessarily drawn according to the actual proportion.

### BRIEF DESCRIPTION OF THE DRAWINGS

FIG. 1 is a block diagram of an escape indicator display system of the present invention;
FIG. 2 is a flow chart of setting up an escape indicator display system of the present invention;
FIG. 3A is a schematic view showing a display unit of an escape indicator display system and its corresponsive escape indication information in accordance with the present invention;
FIG. 3B is a schematic view showing the content of a database in accordance with the present invention;
FIG. 3C is a schematic view of an indicator image of an escape direction indicator in accordance with the present invention;
FIG. 4 is a functional block diagram of an intelligent fire escape system of the present invention;
FIG. 5 is a perspective view of an escape direction indicator of the present invention;
FIG. 6 is a schematic view of installing and using an intelligent fire escape system of the present invention;
FIG. 7 is a schematic view showing the pattern of a Taiwanese escape indicator; and
FIG. 8 is a flow chart of setting up an escape direction indicator of the present invention.

### DESCRIPTION OF THE PREFERRED EMBODIMENTS

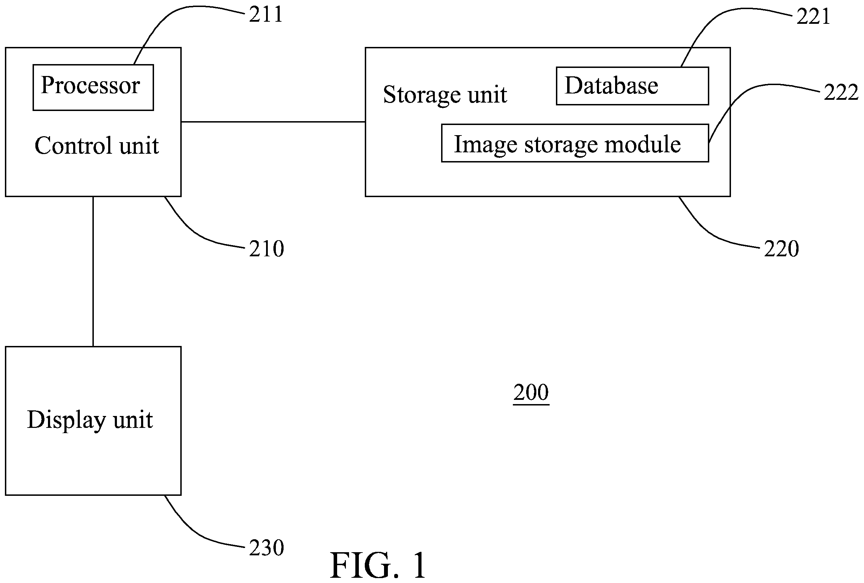

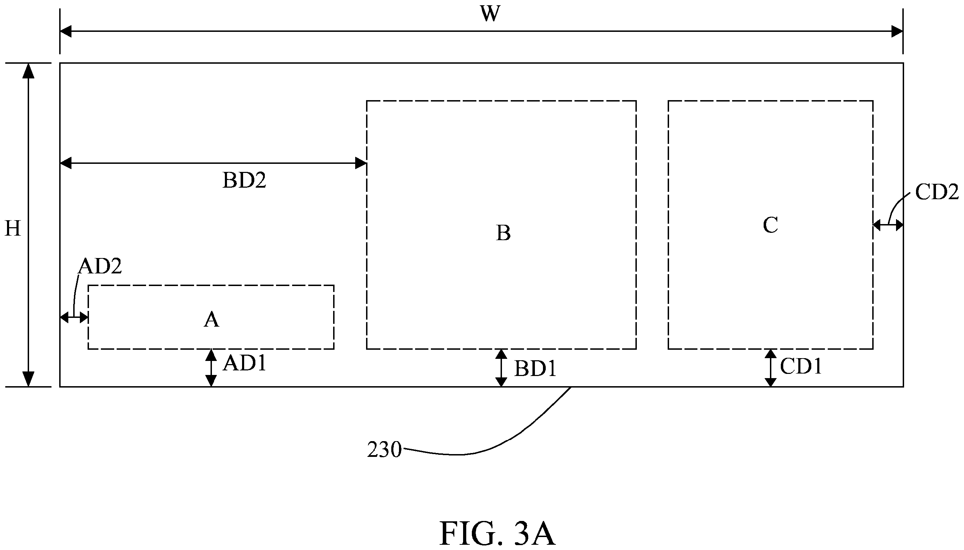

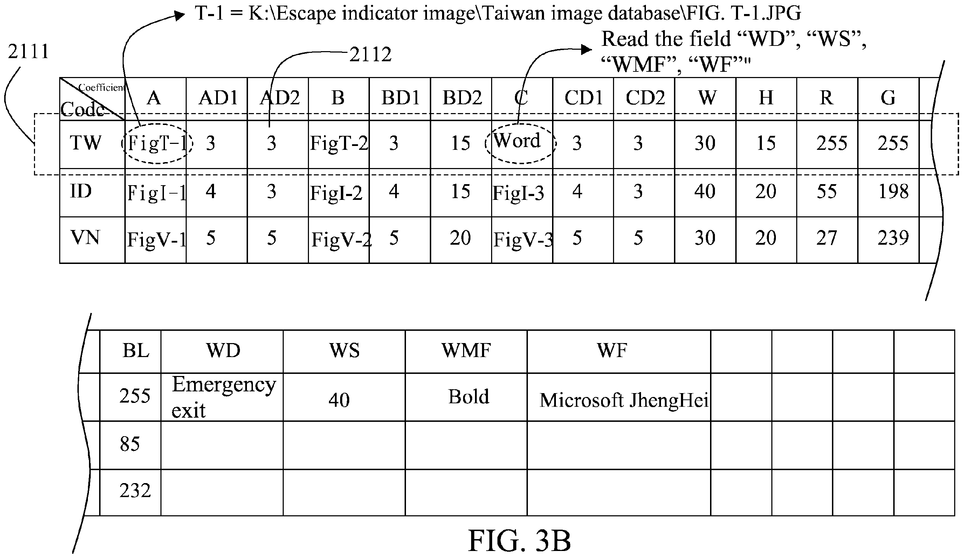

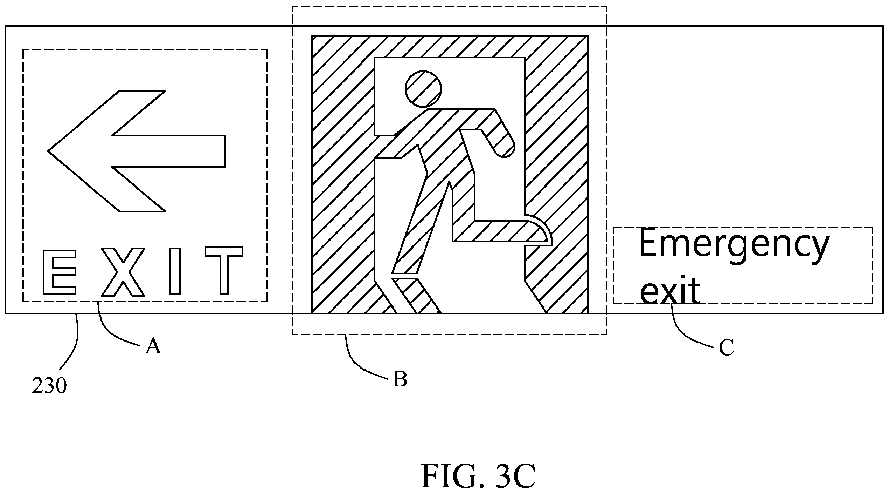

With reference to FIG. 1 for the block diagram of an escape indicator display system 200 of the present invention, the escape indicator display system 200 may display different regulations for different districts and may be applied or used as an escape display or guide for various different disaster situations such as fire, earthquake, and building collapse. The escape indicator display system 200 comprises a control unit 210, a storage unit 220, and a display unit 230. The control unit 210 may be a server coupled between the storage unit 220 and the display unit 230, and users may select or specify a country, a district or a city by the control unit 210. The control unit 210 has a processor 211 installed therein for computing an operation instruction user by the control unit 210. The storage unit 220 has a database 221 and an image storage module 222. With reference to FIG. 3B for a schematic view showing the content of the database 221, the database 221 includes plural records of datarows 2111, and each record of datarow 2111 has a corresponsive location name code, wherein these location name codes are abbreviation of a country used in networks. In FIG. 3B, "TW" represents Taiwan; "ID" represents Indonesia; "VN" represents Vietnam, and these location name codes are corresponsive to the country, district or city selected by the users from the control unit 210. The datarow 2111 has a plurality of field of data and, each field is provided for storing a different escape indication information 2112, and the escape indication information 2112 is used for controlling the display content of the display unit 230 corresponsive to FIGS. 3A and 3C. The display content of the display unit 230 includes but not limited to a length, width, height, interval or size parameter of a border of each part in the display unit 230, or a background color, pixel, color scale parameter in the display unit 230, or an image access path of area A, area B, and area C in the display unit 230. In addition, the image storage module 222 has a plurality of images in compliance with the fire regulations of different countries (as indicated by the arrow, human figure, or text in FIG. 3C), and these images are corresponsive to the field of the image access path in the escape indication information 2112.

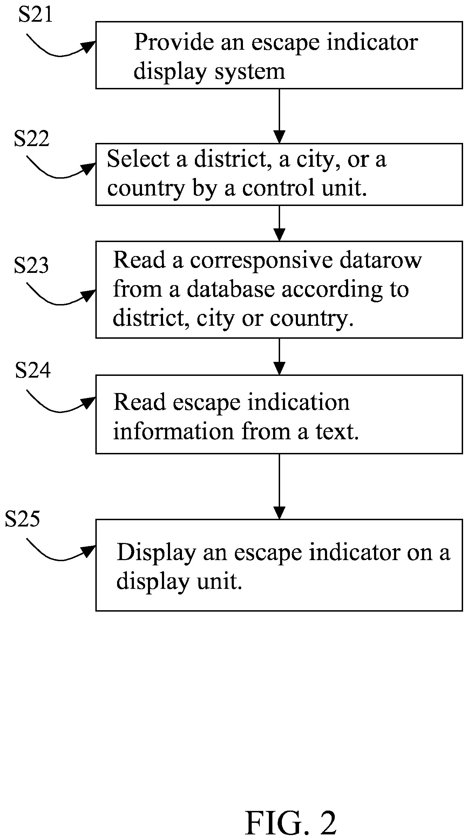

With reference to FIG. 2 for a flow chart of setting up an escape indicator display system 200 of the present invention, FIG. 2 shows the steps of reading data, generating images and displaying images by the escape indicator display system 200 of the present invention. Firstly, an escape indicator display system 200 of the present invention is provided (Step S21). A city, country or district such as Taiwan, Indonesia or Vietnam is selected or inputted in the control unit 210 (Step S22). If the desired city, country or district to be selected has not been stored in the database 221, then the user may use the control unit 210 to manually select or input a specific escape indication information 2112 (to update or add a new datarow 2111 corresponsive to the desired city/country), so that the inputted specific escape indication information 2112 will be stored into the respective field. Further, the control unit 210 or the processor 211 will read a datarow 2111 corresponsive to the location name code according to the location name code (representing the selected country or district). For example, if Taiwan is selected, then the read location name code will be the datarow 2111 of "TW" (Step S23). Then, the control unit 210 or the processor 211 will read all escape indication information 2112 of the datarow 2111 of "TW" and load the contents of the field into the display unit 230, and the display unit 230 will generate an escape indicator image (Step S24), and the details of generating the image will be described later. Finally, the processor 211 will display the escape indicator image on the display unit 230 (Step S25).

With reference to FIGS. 3A and 3B, FIG. 3A is a schematic view showing the display unit of the escape indicator display system of the present invention and its corresponsive escape indication information. The processor 211 reads data from the storage unit 220. When a user selects Taiwan by the control unit 210, the processor 211 will read the code as the datarow 2111 of "TW", load the escape indication information 2112 of each field in the datarow 2111 corresponsive to "TW" and input the escape indication information 2112 into each respective position of the display unit 230 of FIG. 3A. Specifically, the processor 211 reads the datarow 2111 of the code "TW", and the escape indication information 2112 in Field A is shown in "FIG. T-1", wherein "FIG. T-1" refers to an image information, so that when the processor 211 reads "FIG. T-1", an image with the filename "FIG. T-1" will be read from the corresponsive reading path in the image storage module 222, and the image with the filename "FIG. T-1" is stored at a position in FIG. 3A. In other words, Area A of FIG. 3A and Field A of FIG. 3B are corresponsive to each other. In addition, the escape indication information 2112 in Field AD1 of the database 221 is displayed as "3", indicating that the distance of the bottom border of the image in Area A of FIG. 3A is equal to 3 cm. In other words, the distance of the bottom border of Area A of FIG. 3A is corresponsive to Field AD1 of FIG. 3B. Similarly, the escape indication information 2112 of Field AD2 is displayed as "3", indicating that the distance of the left border of the image in Area A of FIG. 3A is also equal to 3 cm. In other words, the distance of the left border of Area A of FIG. 3A is corresponsive to Field AD2 of FIG. 3B, and the content the escape indication information 2112 in Field A, Field AD1 and Field AD2 are provided for controlling the image and positional information in Area A. Similarly, the escape indication information 2112 in Field B, Field BD1 and Field BD2 represent the image and positional information of Area B; the escape indication information 2112 in Field C, Field CD1 and Field CD2 represent the image and positional information of Area C. The datarow 2111 of "TW" is used for example, and the escape indication information 2112 in Field W is "30", indicating that the total width of the indicator image in the display unit 230 of FIG. 3A is 30 cm, and the escape indication information 2112 in Field H is "15", indicating that the total height of the indicator image of the display unit 230 is 15 cm. In addition, Field R, Field G and Field BL in FIG. 3B represent three primary colors: red, green and blue respectively, and the escape indication information 2112 of Field R, Field G and Field BL represent the saturation levels of these three colors, and the saturation level has a minimum value of 0 and a maximum value of 255. When the processor 211 reads the numerical values of Field R, Field G and Field BL of a datarow 2111, the saturation level of each of the primary colors (red, green, and blue) can be confirmed to determine the background color displayed in the indicator image in the display unit 230.

With reference to FIG. 3C for a schematic of an indicator image of an escape direction indicator of the present invention, after the processor 211 has input the escape indication information 2112 in the datarow 2111 of "TW" into each respective position in the display unit 230 of FIG. 3A, an escape indicator image as shown in FIG. 3C will be generated, so that the display unit 230 will show or display the display content corresponsive to the escape indication information 2112 in the plurality of fields of the datarow 2111 of "TW". The display unit 230 of the escape indicator display system 200 serves as an "escape direction indicator", and the indicator image shown or displayed on the display unit 230 is provided as guidance for fire escape.

In a further preferred embodiment, the escape indication information 2112 further includes text information in addition to the aforementioned image, size and color information. In other words, a textual content may be displayed in Area A of the display unit 230. In FIG. 3B, when the content of Field C of the datarow 2111 of "TW" is a text, the processor 211 will read Field WD, Field WS, Field WF and Field WFM again, wherein Field WD represents the content of the text, Field WS represents the size of the text, Field WFM represents the format of the text, and Field WF represents the font of the text. In other words, if the content of Field C is a "text", Field WD is "emergency exit", Field WS is "40", Field WFM is "Bold", Field WF is "Microsoft JhengHei", then the processor 211 will generate the words "emergency exit" with a size of 40 Pt and a Microsoft Bold JhengHei font, and the words "emergency exit" in the specific format are displayed in Area C of the display unit 230 for controlling the textual content of "emergency exit" displayed in the display unit 230 (as shown in FIG. 3C).

If the field of the datarow 2111 is blank, then the user may manually input data to allow the processor 211 to input specific data or contents into the database 221 according to a user requirement and correspond to different escape indicator parameters to control the display and display method of the display unit 230. The user may also add a new datarow 2111 and input a code and a field content to expand the data in the database 221. It is noteworthy that the fields and data shown in FIGS. 3A and 3B are provided for the purpose of illustrating the invention only. Therefore, the datarow 2111 may include more fields and data. To cope with the escape indication information 2112 of the escape indicator image in different sizes, the datarow 2111 further includes Field B A, Field M A and Field S A representing large sized, mid sized and small sized images respectively. Practically, the field and escape indication information 2112 contained in the datarow 2111 may be inputted or set according to the fire regulations of different countries by manufacturers of the escape indicator display system 200.

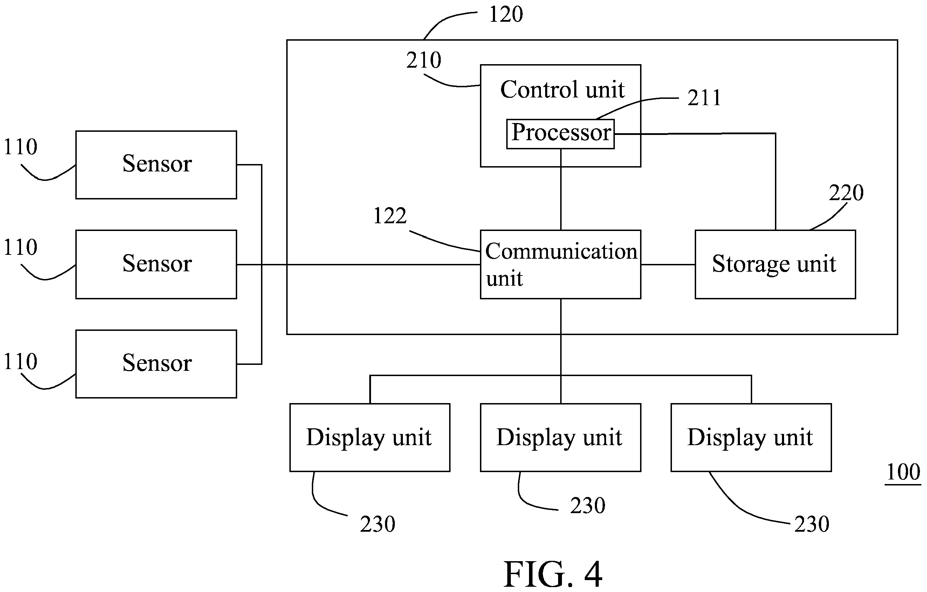

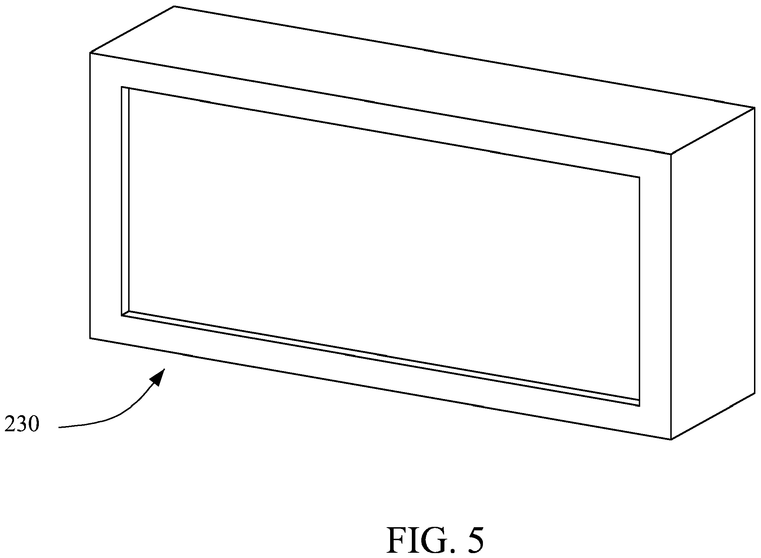

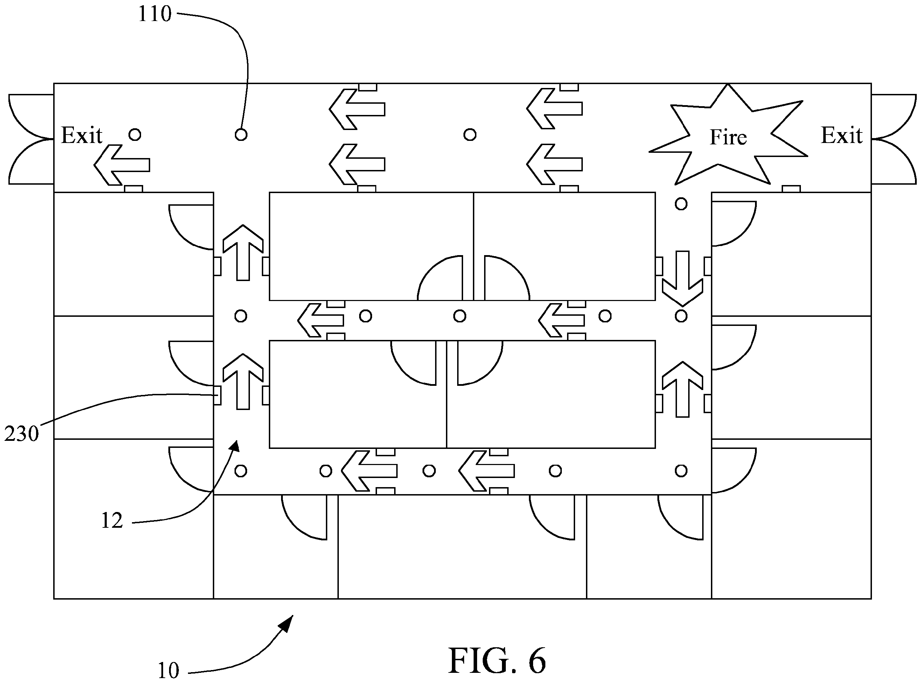

The practical application of the escape indicator display system 200 of the present invention applied to an intelligent fire escape system 100 in accordance with a preferred embodiment of the present invention will be described below. With reference to FIGS. 4∼6, FIG. 4 shows a functional block diagram of the intelligent fire escape system 100, and FIG. 5A is a perspective view showing the escape direction indicator of the present invention. In FIG. 4, the intelligent fire escape system 100 comprises a plurality of sensors 110, a plurality of display units 230, and a server 120, wherein the sensor 110 is installed in an escape channel 12 of a building 10 (as shown in FIG. 6). When the sensor 110 senses an abnormal situation (such as a fire, a drastic increase of temperature, or an increased concentration of smoke) the sensor will issue a warning signal. In this preferred embodiment, the sensor 110 is a cable or wireless sensor. In addition, the display unit 230 is also installed in the escape channel 12 of the building 10, or disposed at an exit position (as shown in FIG. 6).

Further, the server 120 comprises a communication unit 122, a storage unit 220, and a control unit 210, wherein the control unit 210 has a processor 211 installed therein, and the communication unit 122 is connected or coupled to the sensor 110 and the display unit 230 by a cable, wireless or electrical method, so that the sensor 110 and the display unit 230 achieve the effects of communication connection or data exchange.

Further, the storage unit 220 includes a main structural diagram of the building 10 and the database 211. After the intelligent fire escape system 100 is installed, a user may use the control unit 210 of the server 120 to set the district where the intelligent fire escape system 100 is located, so that the server 120 can select a datarow 2111 corresponsive to the district from the database 221. For example, if the intelligent fire escape system 100 is installed in Vietnam, then the datarow 2111 of "VN" representing Vietnam will be selected. Then, the processor 211 of the server 120 will generate a corresponsive escape indicator image according to the escape indication information 2112 in the datarow 2111 corresponsive to "VN", so that each display unit 230 displays the escape indicator image in compliance with the Vietnamese regulations. In addition, the server 120 automatically detect the current location of the intelligent fire escape system 100. For example, a network address (an IP address) is used to determine the current position, or a positioning detector (such as a GPS device) is installed to detect the location of the intelligent fire escape system 100.

With reference to FIG. 4, the processor 211 is electrically coupled to the communication unit 122. When there is a fire, the processor 211 receives a warning signal issued by each sensor 110 through the communication unit 122, and then the processor 211 generates an escape indication information and a control signal and sends the escape indication information and the control signal to the display unit 230 through the communication unit 122, so that the display unit 230 can display the corresponsive escape indicator image.

With reference to FIGS. 4 and 6, FIG. 6 is a schematic view of installing and using an intelligent fire escape system. When the display unit 230 receives the warning signal issued by each sensor 110 through the communication unit 122 and a fire occurs at the northern east exit (indicated by the upper right exit of the floor as shown in FIG. 6 and blocks the exit, the processor 211 will compute the optimal escape path. All display units 230 of the floor receive the escape indication information and control signal issued by the server 120 or the control unit 210 through the communication unit 122, and then display the appropriate escape indication information and control signal from the display unit 230 and a correct escape direction for guiding the people in the floor to a safe northern west exit (indicated by the upper left exit as shown in FIG. 6). In general, the display unit 230 may be installed on a wall of the escape channel 12 or embedded into the floor and pointing at an escape direction.

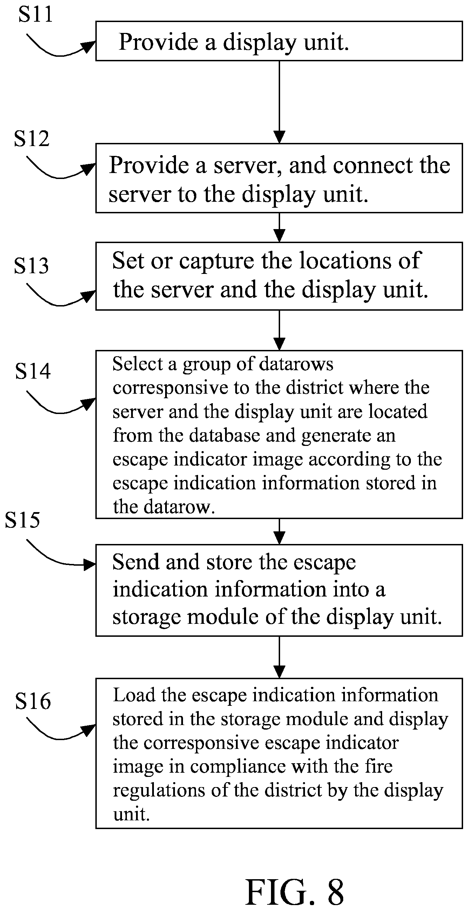

With reference to FIG. 8 for a flow chart of setting up an escape direction indicator in accordance with the present invention, the intelligent fire escape system 100 may have a database 221 installed in the storage unit 220, so that the database 221 has datarows 2111 corresponsive to different countries or districts, and the display unit 230 may display the escape indicator image in compliance with the fire regulation of the district wherein the intelligent fire escape system 100 is installed The method of setting up the intelligent fire escape system 100 of the present invention is described below:

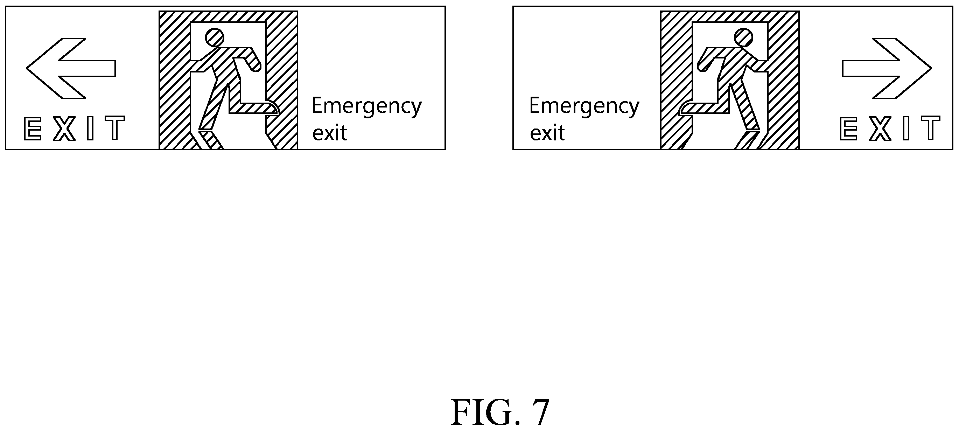

Firstly, a display unit 230 is provided, installed and configured (Step S11), and then a server 120 is provided and installed, and the display unit 230 is telecommunicatively or electrically coupled to the server 120 (Step S12), and then the locations of the server 120 and the display unit 230 are set (Step S13), wherein different countries may be set for the locations of the server 120 and the display unit 230 (if a certain country has a different fire regulation in a different district, then such district may be selected after the country has been selected; for example, Manila is selected after Philippines has been selected). In addition, the server 120 and the display unit 230 may automatically detect or capture the current locations of the server 120 and the display unit 230 through a positioning detector, wherein the positioning detector confirms the locations of the server 120 and the display unit 230 by a global positioning or network positioning method. The server 120 will select a group of datarows 2111 corresponsive to the district where the server 120 and the display unit 230 are located from the database 221 and generate an escape indicator image according to the escape indication information 2112 stored in the datarow 2111 (Step S14). The server 120 will send and store the escape indicator image into a storage module 134 of the display unit 230 (Step S15). Therefore, the display unit 230 can load the escape indication information 2112 stored in the storage module 134 and display the corresponsive escape indicator image in compliance with the fire regulations of the district (Step S16). For example, if Taiwan is selected in Step S13, the display unit 230 will display an escape indicator image in compliance with the fire regulations of Taiwan as shown in FIG. 7. If Vietnam is selected in Step S13, then the display unit 230 will display an escape indicator image in compliance with the fire regulations of Vietnam (and labeled with Vietnamese language, not shown in the figure).

In summation of the description above, the escape indicator display system 200 and its intelligent fire escape system 100 in accordance with the present invention are capable of displaying an escape indicator image in compliance with the local fire regulations according to a change of district where the systems are installed. Therefore, when the escape indicator display system 200 or the intelligent fire escape system 100 is installed in a different district, it is no longer necessary to re-design the systems, and the escape indicator display system 200 fits many different districts.

While the invention has been described by means of specific embodiments, numerous modifications and variations could be made thereto by those skilled in the art without departing from the scope and spirit of the invention set forth in the claims.
210 Control unit
211 Processor
220 Storage unit
221 Database
222 Image storage module
230 Display unit
FIG. 1
S21 Provide an escape indicator display system.
S22 Select a district, a city, or a country by a control unit.
S23 Read a corresponsive datarow from a database according to district, city or country.
S24 Read escape indication information from a text.
S25 Display an escape indicator on a display unit.
FIG. 2
FIG. T-1 = K:\Escape indicator image\Taiwan image database\FIG. T-1.JPG
Coefficient Read the field "WD", "WS", "WMF", "WF"
Code
FIG. 3B
Emergency exit
FIG. 3C
110 Sensor
122 Communication unit
210 Control unit
211 Processor
220 Storage unit
230 Display unit
FIG. 4
Emergency exit
Emergency exit
FIG. 7
S11 Provide a display unit.
S 12 Provide a server, and connect the server to the display unit.
S 13 Set or capture the locations of the server and the display unit.
S 14 Select a group of datarows corresponsive to the district where the server and the display unit are located from the database and generate an escape indicator image according to the escape indication information stored in the datarow.
S 15 Send and store the escape indication information into a storage module of the display unit.
S16 Load the escape indication information stored in the storage module and display the corresponsive escape indicator image in compliance with the fire regulations of the district by the display unit.
FIG. 8

## Claims

1. An escape indicator display system, comprising:
a storage unit, further comprising a database, a plurality of datarows in the database, a location name code corresponsive to each respective datarow and having a plurality of fields, and escape indication information in the field, and the escape indication information including image information, text information, color information or size information;
a display unit, for showing or displaying at least one display content; and
a control unit, coupled between the display unit and the storage unit, and further including a processor;
wherein, when the control unit is used to select a country or a district corresponsive to the location name code, the processor reads a datarow corresponsive to the location name code from the database, and loads or displays the escape indication information with a plurality of fields corresponsive to the display content through the display unit.

2. The escape indicator display system of claim 1, wherein the storage unit further comprises an image storage module, and the image storage module includes plural records of image data stored therein, and the image information of the escape indication information is corresponsive to a storage position or a storage path of the image.

3. The escape indicator display system of claim 1, wherein the text information of the escape indication information includes text content, font, size, color, or format information.

4. A reading method of an escape indicator display system, comprising:
A10: providing an escape indicator display system as recited in claim 1;
A20: selecting a country or a district through the control unit;
A30: reading a corresponsive datarow from a database of the storage unit by the processor according to a location name code of corresponsive country or district; and
A40: reading or loading the escape indication information in each field of the datarow by the processor.

5. The reading method of an escape indicator display system according to claim 4, further selectively comprising the step carried out between Step A20 and Step A30, for inputting at least one escape indication information into a field of the database by the control unit.

6. The reading method of an escape indicator display system according to claim 4, further comprising: Step A50: showing or displaying the display content corresponsive to the escape indication information of the plurality of fields.

7. An escape indicator image generation and display method, comprising the steps of:
B10: providing an escape indicator display system as recited in claim 1;
B20: reading escape indication information in the datarow field by the processor;
B30: generating an escape indicator image according to the image information, the text information, the color information or the size information included in the escape indication information by the processor;
and
B40: displaying or loading the escape indicator image to the display unit by the processor.

8. The escape indicator image generation and display method of claim 7, wherein the escape indication information in Step B30 is image information, and the image information is read from the image storage module by the processor.
